# EUROPÄISCHE PATENTSCHRIFT

(11) **EP 1 950 096 B1**
(45) Veröffentlichungstag und Bekanntmachung des Hinweises auf die Patenterteilung: **15.07.2009**
(21) Anmeldenummer: 07001499.8
(22) Anmeldetag: 24.01.2007
(51) Int. Cl.: B60R 16/02

(54) **Modulares System**
Modular system
Système modulaire

(43) Veröffentlichungstag der Anmeldung: 30.07.2008
(73) Patentinhaber: Delphi Technologies, Inc., Troy, Michigan 48007 (US)
(72) Erfinder: Woeste, Guido, 58332 Schwelm (DE); Bäumer, Peter, 44879 Bochum (DE); Bego-Ghina, Rainer, 44789 Bochum (DE); Rosemann, Achim, 58332 Schwelm (DE)
(74) Vertreter: Denton, Michael John

(56) Entgegenhaltungen:
- US-A- 5 572 525
- US-A- 5 781 747
- ANONYMOUS: "IEC-625-Bus" WIKPEDIA, DIE FREIE ENZYKLOPÄDIE, [Online] 1978, XP002440507 Wikipedia Gefunden im Internet: URL:http://de.wikipedia.org/wiki/IEC-625-B us#Andere_Bezeichnungen> [gefunden am 2007-07-03]

## Beschreibung

Die Erfindung betrifft ein System mit mehreren elektrischen und/oder elektronischen Funktionseinheiten gleicher oder zumindest teilweise unterschiedlicher Funktionalität insbesondere für Kraftfahrzeuge, Wasserfahrzeuge, Luftfahrzeuge, Landmaschinen, Baumaschinen, die Gebäudetechnik und/oder die Telekommunikation.

In Kraftfahrzeugen werden derzeit Modulkonzepte und Architekturen eingesetzt, bei denen durch die vorhandenen Module eine genau festgelegte Leitungssatzarchitektur vorgeschrieben wird. Eventuell erforderliche Bauraumveränderungen erfordern sofort entsprechende Änderungen an den Modulen und dem Leitungssatz. Demzufolge muss die Systemarchitektur verändert werden, was eine Anpassung an die jeweiligen Bauraumvorgaben zumindest schwierig gestaltet.

Es sind zwar bereits elektrische und elektronische Funktionseinheiten mit einheitlichen mechanischen Schnittstellen bekannt, die über mechanische Verrastungen zu größeren elektrischen bzw. elektronischen Funktionseinheiten verbunden werden können. Zudem sind auch bereits elektrische oder elektronische Funktionseinheiten mit einheitlichen elektrischen bzw. elektronischen Schnittstellen bekannt, bei denen gepaarte Steckverbinder verwendet werden, um die elektrischen bzw. elektronischen Funktionseinheiten miteinander elektrisch bzw. elektronisch zu verbinden. Bekannt sind zudem auch Datenbus-Systeme, über die elektrisch miteinander verbundene Funktionseinheiten Informationen austauschen können. Bei den betreffenden bekannten Architekturen wird durch die vorhandenen Module jedoch, wie bereits erwähnt, eine genau festgelegte Leitungsarchitektur vorgeschrieben, so dass eventuelle Bauraumveränderungen jeweils eine grundlegende Änderung der Systemarchitektur erfordern.

Unter der Normbezeichnung IEC-625 wurde bereits ein externer paralleler Datenbus vorgeschlagen, der vorrangig zur Verbindung von Messgeräten und Peripheriegeräten wie Plottern und Druckern mit einem Computer eingesetzt wird (XP-002440507/Wikipedia/Internet 2007). Dabei können für den Anschluss der verschiedenen Geräte an diesen externen Datenbus der Norm IEEE-488 entsprechende Steckverbindungen eingesetzt werden.

In der gattungsbildenden US-A-5 781 747 ist ein so genannter PCI-Bus (Peripheral Component Interconnect Bus) beschrieben, der auf einem "Motherboard"-Konzept basiert und über den durch standardisierte Verbindungen verschiedene Steckkarten miteinander verbindbar sind. Die verschiedenen, für sich alleine nicht funktionsfähigen Steckkarten werden also wieder über einen externen Datenbus miteinander verbunden.

Auch an das in der US-A-5 752 525 beschriebene, einen GPIB-Bus (General Purpose Instrumentation Bus) sowie über Glasfaserkabel miteinander verbundene GPIB-Bus-Erweiterungen umfassende externe Bussystem können über genormte Steckverbindungen wieder unterschiedliche Einheiten angeschlossen werden.

Der Erfindung liegt die Aufgabe zugrunde, ein verbessertes modulares System der eingangs genannten Art zu schaffen, das eine deutlich höhere Flexibilität mit sich bringt.

Erfindungsgemäß wird diese Aufgabe dadurch gelöst, dass es ein modulares System bildet, bei dem jede der Funktionseinheiten jeweils so ausgeführt ist, dass sie auch einzeln einsetzbar ist, jede der Funktionseinheiten jeweils mit wenigstens zwei jeweils sowohl mechanischen als auch elektrischen Schnittstellen versehen ist, die jeweils sowohl im Hinblick auf eine mechanische Zwischenverbindung als auch im Hinblick auf eine elektrische Zwischenverbindung standardisiert sind, die Funktionseinheiten jeweils ein Gehäuse mit einem standardisierten Umriss besitzen, der zumindest teilweise den mechanischen Teil einer jeweiligen Schnittstelle bildet, in den die betreffenden elektrischen Verbindungselemente fest integriert sind, und die an den verschiedenen Funktionseinheiten vorgesehenen Schnittstellen identisch ausgeführt sind, und dadurch die Funktionseinheiten in beliebiger Anzahl und Reihenfolge oder Orientierung unter Herstellung jeweiliger durch die Schnittstellen gebildeter mechanischer und elektrischer Zwischenverbindungen zu einer mechanisch stabilen Einheit zusammenfassbar oder aneinanderreihbar sind.

Aufgrund dieser Ausbildung können ohne zusätzlichen mechanischen und elektrischen Zuatzaufwand problemlos beliebige komplexere bzw. gruppierte Funktionsmodule gebildet werden, wobei die einzelnen elektrischen und/oder elektronischen Funktionseinheiten in jeder beliebigen Reihenfolge bzw. Orientierung zusammengefasst werden können, ohne funktionalen Einschränkungen zu unterliegen. Mit dem erfindungsgemäßen anreihbaren Baukastensystem lassen sich insbesondere auch branchenübergreifende Modullösungen, z.B. für Land- und/oder Baumaschinen und Wasserfahrzeuge usw., konfigurieren. Die aneinandergereihten Funktionseinheiten können erforderlichenfalls in beliebiger Weise neu verteilt werden. Dazu ist lediglich eine neue Leitungssatzführung vorzusehen. Die Systemarchitektur muss nicht verändert werden, so dass das mechanisch und elektrische Konzept jeweils optimal an die gegebenen Bauraumvorgaben angepasst werden kann. Ein entscheidender Vorteil ergibt sich aus der Kombination von einer mechanischen und elektrischen Standardisierung und der entsprechenden Einheitlichkeit bzw. Universalität.

Bevorzugt ist über die Schnittstellen auch wenigstens eine der elektrischen Spannungs- und/oder Stromversorgung dienende Verbindung zwischen den betreffenden zusammengefassten bzw. aneinandergereihten elektrischen und/oder elektronischen Funktionseinheiten herstellbar.

Zweckmäßigerweise ist über die Schnittstellen insbesondere auch wenigstens eine dem Datenaustausch dienende Verbindung zwischen den betreffenden zusammengefassten bzw. aneinandergereihten elektrischen und/oder elektronischen Funktionseinheiten herstellbar.

Vorteilhafterweise sind die elektrischen und/oder elektronischen Funktionseinheiten als universelle bzw. vielseitig einsetzbare Funktionseinheiten ausgeführt.

Eine bevorzugte praktische Ausführung des erfindungsgemäßen modularen Systems zeichnet sich dadurch aus, dass die elektrischen und/oder elektronischen Funktionseinheiten über deren Schnittstellen zur Bildung eines oder mehrerer gruppierter Funktionsmodule wie insbesondere komplexerer Funktionsmodule zusammenfassbar bzw. aneinanderreihbar sind.

Zweckmäßigerweise sind unterschiedliche elektrische und/oder elektronische Funktionseinheiten, insbesondere elektrische und/oder elektronische Funktionseinheiten unterschiedlicher Funktionalität über deren Schnittstellen zu einem oder mehreren Funktionsmodulen zusammenfassbar oder aneinanderreihbar.

Von besonderem Vorteil ist, wenn über deren Schnittstellen zusammengefasste bzw. aneinandergereihte Funktionseinheiten unter Aufrechterhaltung der Funktionalität der einzelnen Funktionseinheiten an beliebiger Stelle wieder trennbar sind.

Gemäß einer bevorzugten zweckmäßigen Ausführungsform des erfindungsgemäßen modularen Systems umfasst wenigstens eine elektrische und/oder elektronische Funktionseinheit bzw. wenigstens ein durch mehrere solche Funktionseinheiten gebildetes Funktionsmodul zumindest eine Sensorfunktion.

Alternativ oder zusätzlich kann auch wenigstens eine elektrische und/oder elektronische Funktionseinheit bzw. wenigstens ein durch mehrere solche Funktionseinheiten gebildetes Funktionsmodul zumindest eine Auswertefunktion umfassen.

Von Vorteil ist insbesondere auch, wenn wenigstens eine elektrische und/oder elektronische Funktionseinheit bzw. wenigstens ein durch mehrere solche Funktionseinheiten gebildetes Funktionsmodul zumindest eine Schalt- und/oder Steuer- bzw. Regelfunktion umfasst.

Vorteilhafterweise kann wenigstens eine elektrische und/oder elektronische Funktionseinheit bzw. wenigstens ein durch mehrere solche Funktionseinheiten gebildetes Funktionsmodul auch zumindest eine Sicherungsfunktion umfassen.

Gemäß einer bevorzugten praktischen Ausführungsform des erfindungsgemäßen modularen Systems sind die elektrischen und/oder elektronischen Funktionseinheiten so ausgeführt, dass sie untereinander austauschbar, miteinander kombinierbar und/oder als einzelne Funktionseinheiten einsetzbar sind.

Die Schnittstellen sind vorteilhafterweise jeweils zumindest im Hinblick auf eine jeweilige der elektrischen Spannungs- und/oder Stromversorgung dienende Zwischenverbindung standardisiert. Alternativ oder zusätzlich können die Schnittstellen jeweils auch im Hinblick auf eine jeweilige dem Datenaustausch dienende Zwischenverbindung standardisiert sein.

Zweckmäßigerweise sind die für einen bestimmten Anwendungsbereich vorgesehenen elektrischen und/oder elektronischen Funktionseinheiten mit Schnittstellen versehen, die entsprechend einem einheitlichen Systemkonzept standardisiert sind, das sich von dem einem anderen Anwendungsbereich zugrunde liegenden und für die Schnittstellenstandardisierung dieses anderen Anwendungsbereichs maßgeblichen einheitlichen Systemkonzept unterscheidet. Es kann somit beispielsweise ein einheitliches Systemkonzept für den Fahrzeugbereich und ein sich davon unterscheidendes anderes einheitliches Systemkonzept beispielsweise für die Telekommunikation/Haustechnik vorgesehen sein. Es sind somit applikationstypische Varianten denkbar, bedingt durch beispielsweise Spannungspegel, Systemspezifikationen und anderweitige mechanische Randbedingungen.

Das erfindungsgemäße modulare System umfasst also vorteilhafterweise universelle elektrische und/oder elektronische Funktionseinheiten oder Module unterschiedlicher Funktionalitäten insbesondere für Kraftfahrzeuge, Wasserfahrzeuge, Luftfahrzeuge, Landmaschinen, Baumaschinen, die Gebäudetechnik und/oder die Telekommunikation, die insbesondere so konzipiert sein können, dass sie einzeln oder als gruppierte Funktionsmodule einsetzbar sind, indem sie jederzeit durch wenigstens eine an der jeweiligen Funktionseinheit bzw. Modul befindliche standardisierte mechanische und elektrische Schnittstelle insbesondere zur Stromversorgung und zum Informationsaustausch mehrfach aneinandergereiht werden können. Dadurch können komplexere Funktionsmodule ohne mechanisch und elektrischen Mehraufwand gebildet werden. Dabei können die einzelnen Funktionseinheiten oder Module in jeder beliebigen Reihenfolge oder Orientierung zusammengefasst werden, ohne irgendwelchen funktionalen Einschränkungen zu unterliegen.

Ein wesentlicher Vorteil des erfindungsgemäßen modularen Systems besteht insbesondere auch darin, dass durch ein Aneinanderreihen unterschiedlicher elektrischer und/oder elektronischer Funktionseinheiten die dadurch entstehenden komplexeren Module nicht nur eine Produktgruppe abdecken, wie es bei den bisherigen Modulkonzepten der Fall ist, sondern für eine Vielzahl von unterschiedlichen Produktgruppen oder Modullösungen bereitgestellt werden können.

So lassen sich aus dem erfindungsgemäßen anreihbaren Baukastensystem insbesondere auch branchenübergreifende Modullösungen zum Beispiel für Land- und Baumaschinen sowie Wasserfahrzeuge konfigurieren.

Gegenüber den bisherigen Modulkonzepten und Kraftfahrzeug-Architekturen, bei denen die vorhandenen Module eine genau festgestellte Leitungssatzarchitektur vorschreiben und eventuelle Bauraumveränderungen sofort entsprechende Änderungen an den Modulen und den Leitungssatz erfordern, ergibt sich durch die erfindungsgemäße Lösung vor allem auch der Vorteil, dass sich die aneinandergereihten elektrischen und/oder elektronischen Funktionseinheiten an beliebiger Stelle wieder trennen lassen und demzufolge beispielsweise im Fahrzeug anschließend wieder beliebig neu verteilt werden können. Es ist lediglich eine neue Leitungssatzführung vorzusehen. Die Systemarchitektur muss nicht verändert werden. Das erfindungsgemäße mechanische und elektrische Konzept ermöglicht demzufolge eine optimale Anpassung an die jeweiligen Bauraumvorgaben.

Es können also gleiche oder verschiedene elektrische und/oder elektronische Funktionseinheiten vorgesehen sein, die jeweils über zumindest eine einheitliche mechanische und elektrische Schnittstelle verfügen. Die elektrischen und/oder elektronischen Funktionseinheiten können für sich betrachtet funktionsfähig sein und lassen sich durch eine jeweilige mechanische und elektrische Verbindung zwischen jeweils zwei solchen Einheiten über die genannte Schnittstelle beliebig zu größeren elektrischen und/oder elektronischen Gruppenfunktionseinheiten zusammenfügen. Diese neu gebildeten elektrischen und/oder elektronischen Gruppenfunktionseinheiten sind über die mechanische und elektrische Schnittstelle bzw. Schnittstellen so miteinander verbunden, dass sie eine mechanische stabile Einheit bilden, elektrische Verbindungen untereinander herstellen, die zumindest eine elektrische Verbindung, zum Beispiel Hochstromverbindung, von jeweils einer elektrischen und/oder elektronischen Funktionseinheit zur mit dieser mechanisch und elektrisch verbundenen anderen elektrischen und/oder elektronischen Funktionseinheit auch über Funktionseinheitsgrenzen hinweg sicherstellen. Gegebenenfalls kann insbesondere auch zumindest eine Datenaustauschverbindung von jeweils einer elektrischen und/oder elektronischen Funktionseinheit bzw. Modul zur damit mechanisch verbundenen anderen elektronischen und/ oder elektrischen Funktionseinheit bzw. Modul auch über Funktionseinheitsgrenzen hinweg sicherstellen. Alternativ oder zusätzlich zu einer jeweiligen der Spannungs- oder Stromversorgung dienenden Verbindung, zum Beispiel elektrischen Hochstromverbindung, kann also insbesondere auch zumindest eine Datenaustauschverbindung zwischen jeweils zwei elektrischen und/oder elektronischen Funktionseinheiten vorgesehen sein.

Die Erfindung ist insbesondere bei Kraftfahrzeugen, Wasserfahrzeugen, Luftfahrzeugen, Landmaschinen, Baumaschinen, der Gebäudetechnik und/oder der Telekommunikation einsetzbar.

Die individuellen, mit standardisierten Schnittstellen ausgestatteten elektrischen und/oder elektronischen Funktionseinheiten können insbesondere zur Erfüllung elektrischer und/oder elektronischer Einzelfunktionen oder Funktionskombinationen ausgelegt sein. Dabei sind beispielsweise die folgenden Einzelfunktionen oder Kombinationen davon denkbar:
- Sensieren
- Auswerten
- Schalten und Steuern
- Absicherung.

Der Aufbau des erfindungsgemäßen Systems von modular oder separat einsetzbaren Funktionseinheiten mit standardisierten Schnittstellen kann insbesondere so ausgestaltet sein, dass die Elemente bzw. Funktionseinheiten untereinander austauschbar, miteinander kombinierbar oder als Einzelmodule bzw. einzelne Einheiten einsetzbar sind. Die Schnittstelle ist standardisiert für die Verbindung im Hinblick auf eine mechanische, eine elektrische bzw. elektronische und eine Datenaustauschkompatibilität.

Hierbei ist sowohl eine Hardware- als auch eine Software-Standardisierung denkbar. Entsprechend standardisierte Produkte können kostengünstiger mit höherer Qualität und kürzeren Entwicklungsphasen hergestellt werden. Das erfindungsgemäße System besitzt im Vergleich zu den bisherigen Systemen eine wesentlich höhere Flexibilität. Aufgrund der erfindungsgemäßen Lösung ist es nunmehr möglich, kleine standardisierte, insbesondere mit einer Leistungs- und Datenbus-Schnittstelle versehene Untereinheiten zu entwickeln. Diese Untereinheiten können verschiedene Funktionen und/oder Technologien enthalten. Das Ergebnis einer entsprechenden modularen Anordnung einer Untereinheit ist eine kundenspezifische elektrische und/oder elektronische "Box". Es kann jeweils die beste Konfiguration für eine jeweilige Untereinheit gewählt werden, die sicherstellt, dass die meisten der elektrischen und/oder elektronischen Fahrzeug-Boxen damit gebildet werden können. Jede Einheit ist auch als eigenständig funktionsfähige Box einsetzbar. Es wird also einerseits eine hohe Funktionsvielfalt durch Zusammensetzen unterschiedlicher Einzelmodule und andererseits eine optimale Zusammenstellung für jeweils ein Gesamtmodul durch Auswahl der am besten geeigneten Einzelmodule ermöglicht. Es können beispielsweise standardisierte elektronische Komponenten (z.B. ASIC's) zur Steuerung und Diagnose von Relais und Sicherungen usw. verwendet werden.

Mit der erfindungsgemäßen Lösung eröffnen sich unter anderem die folgenden vorteilhaften Möglichkeiten:
- modularer Aufbau mit standardisierter Schnittstelle (mechanisch/ Leistung/ Daten);
- freie Skalierbarkeit durch Modulvarianten und Modulumfang;
- unterschiedliche Technologien mit einer aufgebauten Box (gestanztes Metall ("stamped metal") / geführter Draht ("routed wire") / gedruckte Schaltung);
- Baukastensystem;
- zentrale und verteilte Lösungen mit Standardkomponenten;
- Varianten, verschiedene Fahrzeug-Baureihen (Cross-Carline) oder Übernahme bei Neuentwicklung ("carry over");
- das System bietet die Möglichkeit der Überarbeitung einzelner Teileinheiten, ohne das Restsystem zu verändern;
- Anwendbarkeit für eine Vielzahl von Fahrzeugeinheiten;
- eine mit diesem System zusammengesetzte elektrische und/oder elektronische Box kann ohne Änderungen in kleinere Einheiten unterteilt werden;
- Untereinheiten oder Untergruppen einer elektrischen und/oder elektronischen Box können in einen Kabelbaum integriert und mit anderen Teilen der Untergruppe bzw. Untereinheit nach der Montage verbunden werden.

Es werden also standardisierte Einheiten oder Module insbesondere für Fahrzeuge bereitgestellt, die in unterschiedlichen Fahrzeugen eingesetzt werden und über einen Datenbus miteinander kommunizieren können. Das elektrische und/oder elektronische modulare Konzept basiert auf standardisierten Basiseinheiten, die über standardisierte mechanische und elektrische Schnittstellen zusammengefügt werden können, wobei die elektrischen und/oder elektronischen Funktionseinheiten oder Module eine unterschiedliche Funktionalität aufweisen und zusammengebaut oder auch als einzelne, für sich alleine funktionsfähige Einheiten eingesetzt werden können. Dadurch können die meisten in Fahrzeugen vorgesehenen Module durch eine entsprechende Wahl der verschiedenen einzelnen Einheiten zusammengesetzt werden. Die elektrischen und/oder elektronischen Funktionseinheiten können als einzelne Einheiten oder gruppierte Einheiten in Form eines Moduls ohne Änderung der Funktionalität eingesetzt werden. Jedes einzelne Modul bzw. Einheit kann mit der für die jeweilige Anwendung optimalen Technologie versehen sein.

Die Grundidee des modularen Systems besteht darin, dass kleine standardisierte elektrische und/oder elektronische Funktionseinheiten oder Module unterschiedlicher Funktionalität und Technologie über eine Leistungs- und Kommunikations-Schnittstelle zu einem kundenspezifischen Modul zusammenfügbar sind. Die einzelnen Einheiten sind so ausgelegt, dass eine Vielzahl von beispielsweise in einem Fahrzeug eingesetzten Module ersetzt werden kann durch unterschiedlich zusammengefügte modulare Gruppen. Denkbar sind hier beispielsweise anreihbare Leistungsverteiler-, Relais-, Sicherungs- und andere Elektronikeinheiten. Eine Anreihung der verschiedenen Einheiten wird durch standardisierte elektrische und mechanische Schnittstellen zum Beispiel zur Stromversorgung, für Masse und einen Datenaustausch zwischen allen einzelnen Einheiten gewährleistet. Das aus verschiedenen elektrischen und/oder elektronischen Funktionseinheiten zusammengefügte jeweilige komplexere Funktionsmodul kann unterschiedliche Technologien umfassen, ohne dass dazu ein entsprechend höherer Aufwand an Herstellungsprozesstechnologie erforderlich wäre. Es können beispielsweise standardisierte elektronische Komponenten (z.B. ASICs) zur Steuerung und für eine Diagnose von beispielsweise Relais oder Sicherungen realisiert werden. Es ist insbesondere auch eine Zuordnung von Eingabe/Ausgabe-Einheiten über Modulgrenzen hinweg möglich.

Das erfindungsgemäße modulare System ist insbesondere auch zur Realisierung folgender Module oder Einheiten einsetzbar:
- Sitzmodule,
- Cockpit-Module,
- Heckmodule,
- Frontmodule,
- Zentralelektrik- und/oder Zentralelektronikeinheiten,
- Sicherungs- und/oder Relais-Boxen,
- Stromverteilungseinheiten,
- jederzeit durch Ergänzung neuer Einheiten zu weiteren Modulen ausbaubar.

Insbesondere im Fahrzeugbereich ist demzufolge unter anderem eine Hardware-Standardisierung möglich, wobei sich durch entsprechend standardisierte Produkte eine Vielzahl von Vorteilen wie beispielsweise eine Kosteneinsparung durch hohe Stückzahlen, hohes Qualitätsniveau und kurze Entwicklungszeiten ergeben. Die Nachteile der bisher üblichen Systeme wie insbesondere ungenutzte Hardwareanteile und eine Unflexibilität bezüglich Varianten und Änderungen werden vermieden. Mit dem erfindungsgemäßen modularen Universal-Konzept kann kurzfristig für jede Kundenanforderung die passende Lösung angeboten werden.

Mit der erfindungsgemäßen Lösung wird insbesondere auch folgendes erreicht:
- modularer Aufbau von elektrischen und elektronischen Modulen mit einheitlicher Anreih-Schnittstelle (mechanisch/Leistungsstromversorgung/Daten),
- zentrale und dezentrale Lösung gemischt mit einheitlichen Basiskomponenten, wobei die Module im Verbund, einzeln oder in Gruppen als "ein Modul" verwendbar sind,
- Realisierung/ Skalierbarkeit verschiedener elektrischer und/ oder elektronischer Fahrzeugmodule durch Kaskadierung von Teil-(Funktions-) Modulen aus dem Baukasten verschiedener Modularten/-größen,
- Einsatz verschiedener Technologien nebeneinander (Stanzgitter/Routed Wire/PCB bzw. gedruckte Schaltung),
- für Teilmodule kann stets die beste Technologie gewählt werden,
- Zuordnung von Ein-/Ausgangs-Einheiten über die Einzelmodulgrenzen hinweg,
- derzeitige Fahrzeugmodule lassen sich zukünftig in kleine Funktionsmodule aufteilen und bedarfsgerecht modular zusammensetzen.

### "Carry-Over"-Konzept

Beim Einsatz in ein neues Fahrzeug ist eine Neuentwicklung bei Platzproblemen nicht notwendig. Die Module können je nach Bauraum vereinzelt werden. Funktional ergeben sich keine Änderungen. Es ist keine neue Validation der Einheiten erforderlich. Der externe Datenbus kann gleich dem internen Datenbus sein.

### "X-Car"-Konzept

Bei verschiedenen Originalausrüstungsherstellern (OEMs) gibt es für Funktionsgruppen ähnliche Anforderungen, oft sogar gleiche Endkomponenten (elektrische Stellantriebe, Lampenlasten, Sensoren, Lastkreise, ...). Die Funktionen sind hierbei aber in unterschiedlichen Modulen zusammengefasst. Durch die erfindungsgemäßen standardisierten Funktionsmodule kann leicht auf eine den OEM zugeschnittene Moduleinheit konfiguriert werden.

Mit der erfindungsgemäßen Lösung ergeben sich also insbesondere die folgenden Vorteile:
- modularer Aufbau mit einheitlicher Schnittstelle (mechanisch/ Leistung/ Daten),
- freie Skalierbarkeit durch verschiedene Modularten/-größen,
- Einsatz verschiedener Technologien nebeneinander (Stanzgitter/Routed Wire/PCB bzw. gedruckte Schaltung),
- Baukastensystem,
- breites Einsatzfeld beispielsweise in verschiedenen Zonen im Automobil,
- zentrale und dezentrale Lösung gemischt mit einheitlichen Basiskomponenten,
- Ausstattungen/ "Cross-Carlines" / "Carry-Over" leicht zu realisieren,
- Module können einzeln weiterentwickelt und validiert werden,
- Leitungssätze können modular mit den Einzelbaugruppen vorgefertigt werden,
- Zuordnung von E/A-Einheiten über die einzelnen Modulgrenzen hinweg,
- "Building Blocks" auf Modulebene anstatt auf Schaltungsebene,
- Abwärtskompatibilität
   - Ersatzteilsicherung,
   - Upgradefähigkeit, Kompatibilität
   - "Carry-over"-Fähigkeit,
- kleine Funktionseinheiten
   - Ersatzteilkosten,
   - Recyclingfähigkeit, Reduzierung des Elektronikschrotts,
   - geringerer Validierungsaufwand,
   - kürzere Entwicklungszeiten,
- schnelle Verfügbarkeit bei Anfragen
- Verwendung der jeweils besten Technologie, gemäß Anforderung

Die Erfindung wird im Folgenden anhand von Ausführungsbeispielen unter Bezugnahme auf die Zeichnung näher erläutert; in dieser zeigen:
- Figur 1: eine schematische Darstellung einer beispielhaften Ausführungsform des erfindungsgemäßen modularen Systems,
- Figur 2: eine schematische Darstellung einer weiteren beispielhaften Ausführungsform des erfindungsgemäßen modularen Systems,
- Fig. 3: eine schematische Darstellung eines beispielhaften elektronischen Konzepts des erfindungsgemäßen modularen Systems und
- Fig. 4: eine vergrößerte Darstellung des Ausschnitts "A" der Fig. 3.

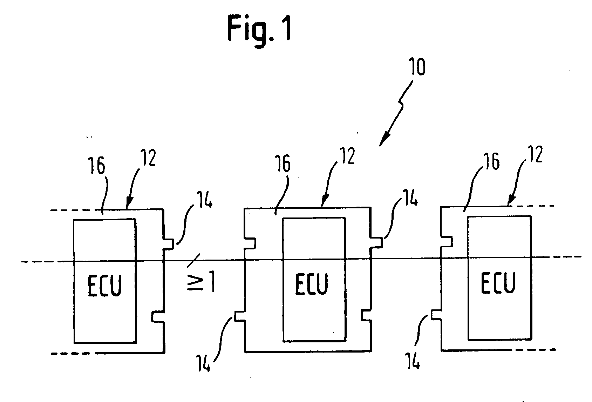

Figur 1 zeigt in schematischer Darstellung eine beispielhafte Ausführungsform eines modularen Systems 10 mit mehreren elektrischen und/oder elektronischen Funktionseinheiten 12 gleicher oder zumindest teilweise unterschiedlicher Funktionalität, wobei im vorliegenden Fall beispielsweise drei elektrische und/oder elektronische Steuereinheiten (ECU = Electronic Control Unit) dargestellt sind, wie sie beispielsweise in Kraftfahrzeugen eingesetzt werden können. Bei diesen elektrischen und/oder elektronischen Funktionseinheiten 12 kann es sich jedoch grundsätzlich auch um beliebige andere elektrische und/oder elektronische Einheiten handeln, wobei sie nicht nur in Kraftfahrzeugen, sondern beispielsweise auch in Wasserfahrzeugen, Luftfahrzeugen, Landmaschinen, Baummaschinen, im Bereich der Gebäudetechnik und/oder im Bereich der Telekommunikation eingesetzt werden können.

Jede der Funktionseinheiten 12 ist jeweils mit wenigstens einer standardisierten bzw. einheitlichen mechanischen und elektrischen Schnittstelle 14 versehen, wodurch die Funktionseinheiten 12 in beliebiger Anzahl und Reihenfolge oder Orientierung unter Herstellung jeweiliger mechanischer und elektrischer Zwischenverbindungen zusammenfassbar oder aneinanderreihbar sind.

Bevorzugt ist eine jeweilige Schnittstelle 14 also sowohl eine mechanische als auch eine elektronische Schnittstelle.

Demzufolge sind die betreffenden elektrischen und/oder elektronischen Funktionseinheiten 12 über diese Schnittstelle 14 zu einer mechanisch stabilen Einheit zusammenfassbar und elektronisch bzw. elektrisch miteinander verbindbar. Dabei ist über die Schnittstellen 14 außer der Schaffung einer mechanisch stabilen Einheit gleichzeitig insbesondere auch wenigstens eine der elektrischen Spannungs- und/oder Stromversorgung und/oder wenigstens eine den Datenaustausch dienende Verbindung zwischen den betreffenden zusammengefassten bzw. aneinandergereihten elektrischen und/oder elektronischen Funktionseinheiten 12 herstellbar.

Die elektrischen und/oder elektronischen Funktionseinheiten 12 können insbesondere als universelle bzw. vielseitig einsetzbare Funktionseinheiten ausgeführt sein. Sie können insbesondere auch so ausgeführt sein, dass sie jeweils auch einzeln einsetzbar sind.

Wie anhand der Figur 1 zu erkennen ist, sind die elektrischen und/oder elektronischen Funktionseinheiten 12 über deren mechanische und elektrische bzw. elektronische Schnittstellen 14 insbesondere auch zur Bildung eines oder mehrerer gruppierter Funktionsmodule wie insbesondere komplexerer Funktionsmodule zusammenfassbar bzw. aneinanderreihbar. Dabei können insbesondere auch unterschiedliche elektrische und/oder elektronische Funktionseinheiten 12 über deren Schnittstellen 14 zu einem oder mehreren Funktionsmodulen zusammengefasst bzw. aneinandergereiht werden.

Über deren Schnittstellen 14 zusammengefasste bzw. aneinandergereihte Funktionseinheiten 12 können anschließend unter Aufrechterhaltung der Funktionalität der einzelnen Funktionseinheiten 12 an beliebiger Stelle wieder getrennt werden.

Die elektrischen und/oder elektronischen Funktionseinheiten 12 können vor allem auch so ausgeführt sein, dass sie untereinander austauschbar, miteinander kombinierbar und/oder als einzelne Funktionseinheiten einsetzbar sind.

Wie bereits erwähnt, sind die Schnittstellen 14 bevorzugt jeweils sowohl im Hinblick auf eine jeweilige mechanische Zwischenverbindung als auch im Hinblick auf eine jeweilige elektrische Zwischenverbindung standardisiert.

Was die Standardisierung der Schnittstellen 14 bezüglich der elektrischen bzw. elektronischen Zwischenverbindungen betrifft, so können diese Schnittstellen 14 jeweils im Hinblick auf eine jeweilige der elektrischen Spannungs- und/oder Stromversorgung dienende Zwischenverbindung und/oder im Hinblick auf eine jeweilige dem Datenaustausch dienende Zwischenverbindung standardisiert sein.

Wie bereits erwähnt, handelt es sich bei den in der Figur 1 dargestellten elektrischen und/oder elektronischen Funktionseinheiten 12 beispielsweise um insbesondere in Kraftfahrzeugen einsetzbare elektrische und/oder elektronische Steuergeräte. Diese sind über standardisierte mechanische und elektrische Schnittstellen 14 zusammenfassbar bzw. aneinanderreihbar.

Wie anhand der Figur 1 zu erkennen ist, besitzen die elektrischen und/oder elektronischen Funktionseinheiten 12 jeweils ein Gehäuse 16 mit einem universellen bzw. standardisierten Umriss, der zumindest teilweise die mechanische Schnittstelle bildet. Zudem umfassen die mechanischen und elektrischen bzw. elektronischen Schnittstellen 14 das Minimum an elektrischen Verbindungen für einen Datenaustausch und/oder eine Leistungsübertragung, je nach Aufbau.

Die mechanischen und elektrischen bzw. elektronischen Schnittstellen 14 können insbesondere so ausgelegt sein, dass durch sie ein elektromechanischer Bus geschaffen wird. Die an den verschiedenen elektrischen und/oder elektronischen Funktionseinheiten 12 vorgesehenen Schnittstellen 14 sind standardisiert, das heißt sie sind identisch ausgeführt, wobei eine jeweilige Funktionseinheit 12 mit einer oder mehreren solchen Schnittstellen 14 versehen sein kann. Im vorliegenden Fall sind die elektrischen und/oder elektronischen Funktionseinheiten 12 jeweils mit beispielsweise zwei standardisierten Schnittstellen 14 versehen.

Es können also zumindest zwei elektrische und/oder elektronische Funktionseinheiten über die mechanischen und elektrischen bzw. elektronischen Schnittstellen 14 zusammengefasst bzw. aneinandergereiht werden, wodurch eine mechanisch stabile Einheit entsteht und zumindest eine elektrische Verbindung zwischen den jeweiligen Funktionseinheiten hergestellt wird. Die betreffenden elektrischen Verbindungselemente können fest in den jeweiligen mechanischen Schnittstellen integriert sein. Über eine jeweilige elektrische Verbindung kann insbesondere Energie übertragen werden und/oder ein Datenaustausch erfolgen, je nach den jeweiligen Gegebenheiten. Für die Bildung der gruppierten oder komplexeren Funktionsmodule aus den betreffenden elektrischen und/oder elektronischen Funktionseinheiten 12 sind keine zusätzlichen Elemente wie Träger, Verbinder usw. zwingend erforderlich, um die mechanische elektrische Verbindung herzustellen. Solche zusätzlichen Elemente können allerdings z.B. als Befestigungselemente oder -system-/schnittstellen-kompatible Anschlusselemente zum Einsatz kommen.

Jede der gleichen oder unterschiedlichen elektrischen und/oder elektronischen Funktionseinheiten 12 ist also jeweils mit wenigstens einer standardisierten Schnittstelle 14 versehen, bei der es sich um eine sowohl im Hinblick auf die mechanische Verbindung als auch im Hinblick auf die elektrische bzw. elektronische Verbindung standardisierte Schnittstelle handelt, wobei bei einer solchen Schnittstelle 14 jeweils wenigstens eine der elektrischen Spannungs- und/oder Stromversorgung dienende Verbindung und/oder wenigstens eine dem Datenaustausch dienende Verbindung zwischen den betreffenden zusammengefassten bzw. aneinandergereihten elektrischen und/oder elektronischen Funktionseinheiten herstellbar ist.

Die Anzahl der jeweils eingesetzten elektrischen und/oder elektronischen Funktionseinheiten 12 kann gleich 1 oder auch größer als 1 sein.

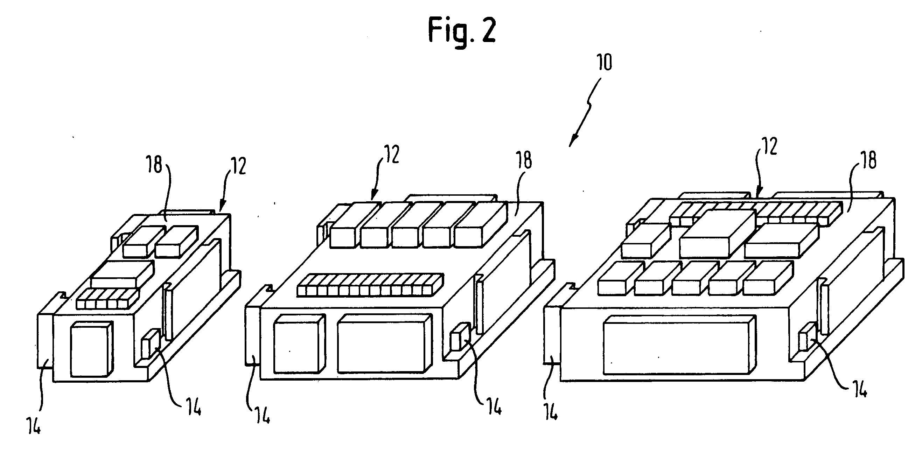

Figur 2 zeigt in schematischer Darstellung eine weitere beispielhafte Ausführungsform eines erfindungsgemäßen modularen Systems 10, wobei in diesem Fall die elektrischen und/oder elektronischen Funktionseinheiten 12 jedoch durch unterschiedliche Relais/Sicherungs-Einheiten gebildet sind. Diese elektrischen und/oder elektronischen Funktionseinheiten 12 umfassen jeweils einen Relais/Sicherungs-Träger 18. Dabei können die Relais/Sicherungs-Träger 18 der verschiedenen elektrischen und/oder elektronischen Funktionseinheiten 12 unterschiedlich ausgestaltet sein, wie dies in der Figur 2 zu erkennen ist.

Jede der elektrischen und/oder elektronischen Funktionseinheiten 12 ist auch im vorliegenden Fall jeweils wieder mit wenigstens einer mechanischen und elektrischen bzw. elektronischen Schnittstelle 14 versehen, wodurch die Funktionseinheiten 12 wieder in beliebiger Anzahl und Reihenfolge oder Orientierung unter Herstellung jeweiliger mechanischer und elektrischer Zwischenverbindungen zusammenfassbar oder aneinanderreihbar sind.

In der Figur 2 sind beispielsweise drei unterschiedliche elektrische bzw. elektronische Funktionseinheiten 12 dargestellt. Grundsätzlich kann das modulare System 10 jedoch auch eine beliebige andere Anzahl von solchen elektrischen bzw. elektronischen Funktionseinheiten 12 aufweisen, wobei diese gegebenenfalls zumindest teilweise auch identisch ausgeführt sein können.

Auch im Übrigen kann diese in der Figur 2 wiedergegebene Ausführungsform zumindest im Wesentlichen wieder den gleichen Aufbau wie die der Figur 1 besitzen.

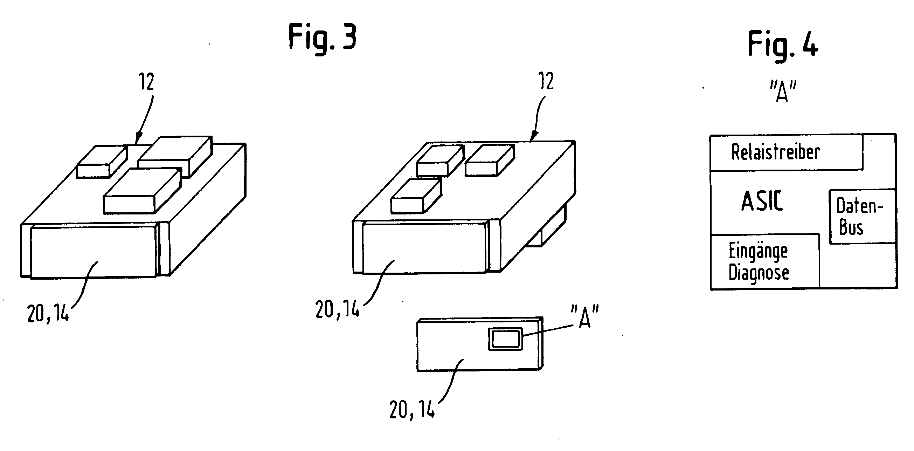

Figur 3 zeigt in schematischer Darstellung ein beispielhaftes elektronisches Konzept des erfindungsgemäßen modularen Systems. In Figur 4 ist eine vergrößerte Darstellung des Ausschnitts "A" der Figur 3 wiedergegeben.

In der Figur 3 sind zwei elektrische und/oder elektronische Funktionseinheiten 12 zu erkennen, die jeweils mit einer gedruckten Schaltung (PCB) 20 versehen sind. Dabei können die Schnittstellen 14, d.h. insbesondere deren elektrischer bzw. elektronischer Teil, zumindest teilweise durch diese gedruckten Schaltungen 20 gebildet sein.

Dieses elektronische Konzept zeichnet sich insbesondere durch folgendes aus:
1. Kleine Elektronikeinheiten
2. ASIC als Steuerungs- bzw. Diagnoseeinheit für einfache Module möglich, da
   - einfache Funktionen
   - kostengünstig, da hohe Stückzahl.
3. Mikroprozessor für intelligente Steuerungen
   - Standard-Hardware
   - OEM-spezifische Hardware.

### Datenbus

- einzelner oder kaskadierter Betrieb möglich
- interner Daten-Bus kann auch externer Datenbus sein.

### Bezugszeichenliste

- 10: modulares System
- 12: elektrische und/oder elektronische Funktionseinheit
- 14: mechanische und elektrische Schnittstelle
- 16: Gehäuse
- 18: Relais/ Sicherungs-Träger
- 20: gedruckte Schaltung

## Patentansprüche

1. System (10) mit mehreren elektrischen und/oder elektronischen Funktionseinheiten (12) gleicher oder zumindest teilweise unterschiedlicher Funktionalität insbesondere für Kraftfahrzeuge, Wasserfahrzeuge, Luftfahrzeuge, Landmaschinen, Baumaschinen, die Gebäudetechnik und/oder die Telekommunikation,
**dadurch gekennzeichnet,**
**dass** es ein modulares System bildet, bei dem jede der Funktionseinheiten (12) jeweils so ausgeführt ist, dass sie auch einzeln einsetzbar ist, jede der Funktionseinheiten (12) jeweils mit wenigstens zwei jeweils sowohl mechanischen als auch elektrischen Schnittstellen (14) versehen ist, die jeweils sowohl im Hinblick auf eine mechanische Zwischenverbindung als auch im Hinblick auf eine elektrische Zwischenverbindung standardisiert sind, die Funktionseinheiten (12) jeweils ein Gehäuse 16 mit einem standardisierten Umriss besitzen, der zumindest teilweise den mechanischen Teil einer jeweiligen Schnittstelle (14) bildet, in den die betreffenden elektrischen Verbindungselemente fest integriert sind, und die an den verschiedenen Funktionseinheiten (12) vorgesehenen Schnittstellen (14) identisch ausgeführt sind, und **dadurch** die Funktionseinheiten (12) in beliebiger Anzahl und Reihenfolge oder Orientierung unter Herstellung jeweiliger durch die Schnittstellen (14) gebildeter mechanischer und elektrischer Zwischenverbindungen zu einer mechanisch stabilen Einheit zusammenfassbar oder aneinanderreihbar sind.

2. Modulares System nach Anspruch 1,
**dadurch gekennzeichnet,**
**dass** über die Schnittstellen (14) wenigstens eine der elektrischen Spannungs- und/oder Stromversorgung dienende Verbindung zwischen den betreffenden zusammengefassten bzw. aneinandergereihten elektrischen und/oder elektronischen Funktionseinheiten (12) herstellbar ist.

3. Modulares System nach Anspruch 1 oder 2,
**dadurch gekennzeichnet,**
**dass** über die Schnittstellen (14) wenigstens eine dem Datenaustausch dienende Verbindung zwischen den betreffenden zusammengefassten bzw. aneinandergereihten elektrischen und/oder elektronischen Funktionseinheiten (12) herstellbar ist.

4. Modulares System nach einem der vorhergehenden Ansprüche,
**dadurch gekennzeichnet,**
**dass** die elektrischen und/oder elektronischen Funktionseinheiten (12) als universelle bzw. vielseitig einsetzbare Funktionseinheiten ausgeführt sind.

5. Modulares System nach einem der vorhergehenden Ansprüche,
**dadurch gekennzeichnet,**
**dass** die elektrischen und/oder elektronischen Funktionseinheiten (12) über deren Schnittstellen (14) zur Bildung eines oder mehrerer gruppierter Funktionsmodule wie insbesondere komplexerer Funktionsmodule zusammenfassbar bzw. aneinanderreihbar sind.

6. Modulares System nach einem der vorhergehenden Ansprüche,
**dadurch gekennzeichnet,**
**dass** unterschiedliche elektrische und/oder elektronische Funktionseinheiten (12), insbesondere elektrische und/oder elektronische Funktionseinheiten (12) unterschiedlicher Funktionalität über deren Schnittstellen (14) zu einem oder mehreren Funktionsmodulen zusammenfassbar bzw. aneinanderreihbar sind.

7. Modulares System nach einem der vorhergehenden Ansprüche,
**dadurch gekennzeichnet,**
**dass** über deren Schnittstellen (14) zusammengefasste bzw. aneinandergereihte Funktionseinheiten (12) unter Aufrechterhaltung der Funktionalität der einzelnen Funktionseinheiten (12) an beliebiger Stelle wieder trennbar sind.

8. Modulares System nach einem der vorhergehenden Ansprüche,
**dadurch gekennzeichnet,**
**dass** wenigstens eine elektrische und/oder elektronische Funktionseinheit (12) bzw. wenigstens ein durch mehrere solche Funktionseinheiten (12) gebildetes Funktionsmodul zumindest eine Sensorfunktion umfasst.

9. Modulares System nach einem der vorhergehenden Ansprüche,
**dadurch gekennzeichnet,**
**dass** wenigstens eine elektrische und/oder elektronische Funktionseinheit (12) bzw. wenigstens ein durch mehrere solche Funktionseinheiten (12) gebildetes Funktionsmodul zumindest eine Auswertefunktion umfasst.

10. Modulares System nach einem der vorhergehenden Ansprüche,
**dadurch gekennzeichnet,**
**dass** wenigstens eine elektrische und/oder elektronische Funktionseinheit (12) bzw. wenigstens ein durch mehrere solche Funktionseinheiten (12) gebildetes Funktionsmodul zumindest eine Schalt- und/oder Steuer- bzw. Regelfunktion umfasst.

11. Modulares System nach einem der vorhergehenden Ansprüche,
**dadurch gekennzeichnet,**
**dass** wenigstens eine elektrische und/oder elektronische Funktionseinheit (12) bzw. wenigstens ein durch mehrere solche Funktionseinheiten (12) gebildetes Funktionsmodul zumindest eine Sicherungsfunktion umfasst.

12. Modulares System nach einem der vorhergehenden Ansprüche,
**dadurch gekennzeichnet,**
**dass** die elektrischen und/oder elektronischen Funktionseinheiten (12) so ausgeführt sind, dass sie untereinander austauschbar, miteinander kombinierbar und/oder als einzelne Funktionseinheiten (12) einsetzbar sind.

13. Modulares System nach einem der vorhergehenden Ansprüche,
**dadurch gekennzeichnet,**
**dass** die Schnittstellen (14) jeweils zumindest im Hinblick auf eine jeweilige der elektrischen Spannungs- und/oder Stromversorgung dienende Zwischenverbindung standardisiert sind.

14. Modulares System nach einem der vorhergehenden Ansprüche,
**dadurch gekennzeichnet,**
**dass** die Schnittstellen (14) jeweils zumindest im Hinblick auf eine jeweilige dem Datenaustausch dienende Zwischenverbindung standardisiert sind.

15. Modulares System nach einem der vorhergehenden Ansprüche,
**dadurch gekennzeichnet,**
**dass** die für einen bestimmten Anwendungsbereich vorgesehenen elektrischen und/oder elektronischen Funktionseinheiten (12) mit Schnittstellen (14) versehen sind, die entsprechend einem einheitlichen Systemkonzept standardisiert sind, das sich von dem einem anderen Anwendungsbereich zugrunde liegenden und für die Schnittstellenstandardisierung dieses anderen Anwendungsbereichs maßgeblichen einheitlichen Systemkonzept unterscheidet.

## Claims

1. System (10) with several electrical and/or electronic functional units (12) of similar or at least partially different functionality in particular for motor vehicles, watercrafts, aircrafts, agricultural machines, construction machines, building services and/or telecommunication,
**characterized in that**
it forms a modular system in which each of the functional units (12) is respectively adapted such, that it can be employed individually, each of the functional units (12) is provided with at least two mechanical and electrical interfaces (14), respectively, standardized in regard to both a mechanical interconnection and an electrical interconnection, the functional units (12) respectively having a housing 16 with a standardized profile forming at least partially the mechanical part of a respective interface (14), in which the respective electrical connection elements are firmly integrated, and the interfaces (14), provided at the different functional units (12), are formed identically, and thereby the functional units (12) can be combined or linked together to a mechanical robust unit through generation of respective mechanical and electrical interconnections, formed through the interfaces (14), in any number and sequence or orientation.

2. Modular system according to claim 1,
**characterized in that**
at least one connection, serving as the electrical voltage and/or power supply, between the respective combined or linked together, respectively, electrical and/or electronic functional units (12) can be established through the interfaces (14).

3. Modular system according to claim 1 or 2,
**characterized in that**
at least one connection, serving as data exchange, between the respective combined or linked together, respectively, electrical and/or electronic functional units (12) can be established through the interfaces (14).

4. Modular system according to one of the preceding claims,
**characterized in that**
the electrical and/or electronic functional units (12) are provided as universal or versatile functional units, respectively.

5. Modular system according to one of the preceding claims,
**characterized in that**
the electrical and/or electronic functional units (12) can be combined or linked together, respectively, through their interfaces (14) to form one or several grouped functional modules, in particular more complex functional modules.

6. Modular system according to one of the preceding claims,
**characterized in that**
different electrical and/or electronic functional units (12), in particular electrical and/or electronic functional units (12) with different functionality, can be combined or linked together, respectively, through their interfaces (14) to one or several functional modules.

7. Modular system according to one of the preceding claims,
**characterized in that**
functional units (12), combined or linked together, respectively, through their interfaces (14), are separable again at any position while keeping the functionality of the individual functional units (12).

8. Modular system according to one of the preceding claims,
**characterized in that**
at least one electrical and/or electronic functional unit (12) or at least one functional module formed by several such functional units (12), respectively, includes at least one sensor function.

9. Modular system according to one of the preceding claims,
**characterized in that**
at least one electrical and/or electronic functional unit (12) or at least one functional module formed by several such functional units (12), respectively, includes at least one evaluation function.

10. Modular system according to one of the preceding claims,
**characterized in that**
at least one electrical and/or electronic functional unit (12) or at least one functional module formed by several such functional units (12), respectively, includes at least one switching and/or control function.

11. Modular system according to one of the preceding claims,
**characterized in that**
at least one electrical and/or electronic functional unit (12) or at least one functional module formed by several such functional units (12), respectively, includes at least one security function.

12. Modular system according to one of the preceding claims,
**characterized in that**
the electrical and/or electronic functional units (12) are provided such that they are interchangeable, combinable with one another and/or employable as individual functional units (12).

13. Modular system according to one of the preceding claims,
**characterized in that**
the interfaces (14) are standardized respectively at least in regard to an interconnection serving as an electrical voltage and/or power supply.

14. Modular system according to one of the preceding claims,
**characterized in that**
the interfaces (14) are standardized respectively at least in regard to an interconnection serving as a data exchange.

15. Modular system according to one of the preceding claims,
**characterized in that**
the electrical and/or electronic functional units (12), provided for a given application area, are provided with interfaces (14) standardized according to a standard system concept, which is different from a standard system concept as basis for another application area and provided for the interface standardization of this other application area.

## Revendications

1. Système (10) comprenant plusieurs unités fonctionnelles (12) électriques et/ou électroniques présentant la même fonctionnalité ou une fonctionnalité au moins partiellement différente, en particulier pour véhicules automobiles, véhicules marins, véhicules aériens, machines agricoles, machines de travaux publics, dans les techniques du bâtiment et/ou les télécommunications,
**caractérisé en ce que**
il forme un système modulaire dans lequel chacune des unités fonctionnelles (12) est réalisée respectivement de telle façon qu'elle peut aussi être employée individuellement, chacune des unités fonctionnelles (12) est pourvue respectivement d'au moins deux interfaces (14) aussi bien mécaniques qu'électriques, qui sont respectivement standardisées aussi bien en vue d'une liaison intermédiaire mécanique qu'en vue d'une liaison intermédiaire électrique, les unités fonctionnelles (12) possèdent chacune un boîtier (16) avec un contour standardisé, qui forme au moins partiellement la partie mécanique d'une interface respective (14) et dans lequel les éléments de liaison électriques concernés sont intégrés de manière fixe, et les interfaces (14) prévues sur les diverses unités fonctionnelles (12) sont réalisées identiques, et grâce à cela les unités fonctionnelles (12) peuvent être regroupées ou mises en rangées les unes contre les autres en un nombre et une succession ou encore une orientation quelconque en une unité mécaniquement stable en établissant des liaisons intermédiaires mécaniques et électriques respectives formées par les interfaces (14).

2. Système modulaire selon la revendication 1,
**caractérisé en ce qu'**au moins une liaison, servant à l'alimentation de tension et/ou de courant électrique, est susceptible d'être établie via les interfaces (14) entre les unités fonctionnelles électriques et/ou électroniques (12) concernées regroupées ou mises en rangées les unes contre les autres.

3. Système modulaire selon la revendication 1 ou 2,
**caractérisé en ce qu'**au moins une liaison, servant à l'échange de données, est susceptible d'être établie via les interfaces (14) entre les unités fonctionnelles électriques et/ou électroniques (12) concernées regroupées ou mises en rangées les unes contre les autres.

4. Système modulaire selon l'une des revendications précédentes,
**caractérisé en ce que** les unités fonctionnelles électriques et/ou électroniques (12) sont réalisées sous forme d'unités fonctionnelles universelles ou susceptibles d'être utilisées de façon multiple.

5. Système modulaire selon l'une des revendications précédentes,
**caractérisé en ce que** les unités fonctionnelles électriques et/ou électroniques (12) sont susceptibles d'être regroupées ou mises en rangées les unes contre les autres via leurs interfaces (14) pour former un ou plusieurs modules fonctionnels groupés, comme en particulier des modules fonctionnels plus complexes.

6. Système modulaire selon l'une des revendications précédentes,
**caractérisé en ce que** les unités fonctionnelles électriques et/ou électroniques (12) différentes, en particulier des unités fonctionnelles électriques et/ou électroniques (12) présentant des fonctionnalités différentes sont susceptibles d'être regroupées ou mises en rangées les unes contre les autres via leurs interfaces (14) pour former un ou plusieurs modules fonctionnels.

7. Système modulaire selon l'une des revendications précédentes,
**caractérisé en ce que** des unités fonctionnelles (12) regroupées ou mises en rangées les unes contre les autres via leurs interfaces (14) peuvent être à nouveau séparées à un emplacement quelconque en maintenant la fonctionnalité des unités fonctionnelles individuelles (12).

8. Système modulaire selon l'une des revendications précédentes,
**caractérisé en ce qu'**au moins une unité fonctionnelle électrique et/ou électronique (12) ou respectivement au moins un module fonctionnel formé par plusieurs unités fonctionnelles (12) de ce type comprend au moins une fonction de capteur.

9. Système modulaire selon l'une des revendications précédentes,
**caractérisé en ce qu'**au moins une unité fonctionnelle électrique et/ou électronique (12) ou respectivement au moins un module fonctionnel formé par plusieurs unités fonctionnelles (12) de ce type comprend au moins une fonction d'évaluation.

10. Système modulaire selon l'une des revendications précédentes,
**caractérisé en ce qu'**au moins une unité fonctionnelle électrique et/ou électronique (12) ou respectivement au moins un module fonctionnel formé par plusieurs unités fonctionnelles (12) de ce type comprend une fonction de commutation et/ou de commande et/ou de régulation.

11. Système modulaire selon l'une des revendications précédentes,
**caractérisé en ce qu'**au moins une unité fonctionnelle électrique et/ou électronique (12) ou respectivement au moins un module fonctionnel formé par plusieurs unités fonctionnelles (12) de ce type comprend au moins une fonction de sécurité.

12. Système modulaire selon l'une des revendications précédentes,
**caractérisé en ce que** les unités fonctionnelles électriques et/ou électroniques (12) sont réalisées de telle façon qu'elles peuvent être échangées les unes entre les autres, combinées les unes avec les autres et/ou utilisables à titre d'unités fonctionnelles (12) individuelles.

13. Système modulaire selon l'une des revendications précédentes,
**caractérisé en ce que** les interfaces (14) sont respectivement standardisées au moins à l'égard d'une liaison intermédiaire servant à l'alimentation en tension et/ou en courant électrique respective.

14. Système modulaire selon l'une des revendications précédentes,
**caractérisé en ce que** les interfaces (14) sont respectivement standardisées au moins à l'égard d'une liaison intermédiaire servant à l'échange de données respectif.

15. Système modulaire selon l'une des revendications précédentes,
**caractérisé en ce que** les unités fonctionnelles électriques et/ou électroniques (12) prévues pour un domaine d'application déterminé sont pourvues d'interfaces (14) qui sont standardisées en correspondance d'un concept de système unitaire, qui se distingue d'un concept de système unitaire sous-jacent à un autre domaine d'application et déterminant pour la standardisation des interfaces de cet autre domaine d'application.
